# EUROPEAN PATENT APPLICATION

(11) **EP 2 755 424 A1**
(43) Date of publication of application: **16.07.2014**
(21) Application number: 12829248.9
(22) Date of filing: 06.09.2012
(51) Int. Cl.: H04W 36/22, H04W 36/14, H04W 48/18

(54) **BASE STATION, NETWORK DEVICE, AND COMMUNICATION CONTROL METHOD**

(30) Priority: 09.09.2011 JP 2011197604
(71) Applicant: NTT DOCOMO, INC., Chiyoda-ku Tokyo 100-6150 (JP)
(72) Inventor: OOKUBO, Naoto, Tokyo 100-6150 (JP)
(74) Representative: HOFFMANN EITLE
(86) International application number: PCT/JP2012/072703
(87) International publication number: WO 2013/035772

(57) **Abstract**

An eNB 110 includes an HO activation metric acquisition unit 111 which acquires a metric indicating a state of a voice call to be processed through the eNB 110, a mobile station state acquisition unit 112 which acquires a state of a mobile station processing the voice call, and an HO processing unit 113 which transmits a handover instruction, instructing a handover of the mobile station to a 3G system, to the mobile station when a value of the metric acquired by the HO activation metric acquisition unit 111 exceeds a predetermined threshold and when the state of the mobile station acquired by the mobile station state acquisition unit 112 satisfies a predetermined condition.

## Description

### TECHNICAL FIELD

The present invention relates to a base station, a network device, and a communication control method, which are configured to control a mobile station connectable to a first radio communication system and a second radio communication system of a communication scheme different from that of the first radio communication system.

### BACKGROUND ART

According to Long Term Evolution (LTE) standardized by 3rd Generation Partnership Project (3GPP), radio resources to be allocated to a mobile station (UE) are selected depending on the subframe (Transmission Time Interval). Specifically, a base station (eNB) selects a radio resource, namely, a physical downlink shared channel (PDSCH) to be allocated to a mobile station by using a scheduler, and notifies the mobile station of allocation information (such as the number of resource blocks and positions thereof) on the radio resource by using a physical downlink control channel (PDCCH). Such a scheduling scheme is called Dynamic scheduling.

The Dynamic scheduling increases overheads of the physical downlink control channel. Hence, there is an upper limit to the allocation information that can be multiplexed on the physical downlink control channel, or, in other words, to the number of mobile stations. Particularly, a situation where the resources on the physical downlink control channel are exhausted while there are still spare resources on the physical down link shared channel may arise in the case of a voice call, for example, which involves a small data size but strict requirements on transmission delay.

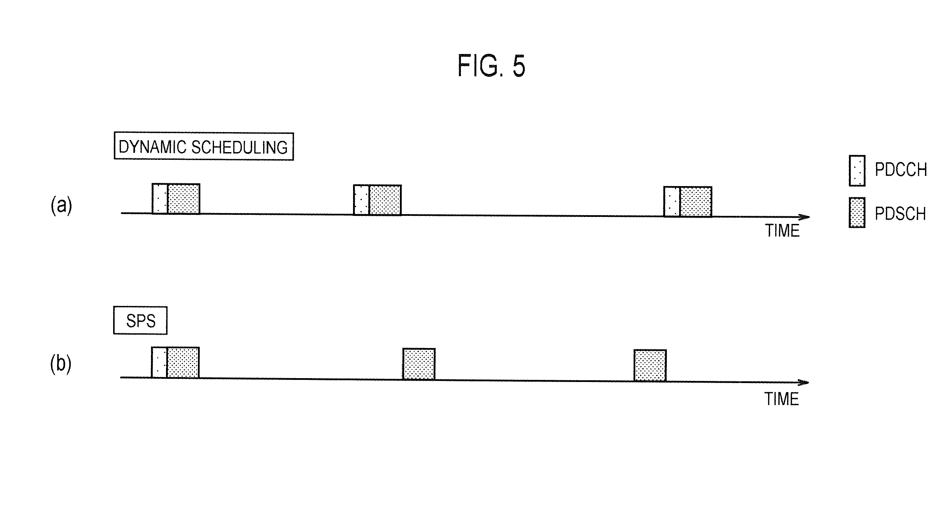

In this regard, LTE specifies a scheduling scheme called Semi-persistent scheduling (SPS) as a scheduling process suitable for a packet such as a voice call (Voice over LTE) which involves a small data size but strict requirements on transmission delay (see Non-patent document 1, for example). Figs. 5(a) and 5(b) are explanatory views of the scheduling according to the Dynamic scheduling and the SPS. As shown in Fig. 5, in the SPS, a base station firstly notifies of allocation information on a radio resource using the PDCCH. After the notification, the base station continues to allocate the radio resource to a mobile station periodically in a fixed format, thereby rendering it unnecessary to notify of the allocation information through the PDCCH.

Meanwhile, there is standardized Single Radio Voice Call Continuity (SRVCC), which is adapted to an environment where LTE and a third-generation radio communication system (hereinafter a 3G) of a W-CDMA scheme coexist. The SRVCC is configured to hand over a mobile station processing a voice call in LTE to a 3G circuit-switched (CS) domain, and thereby to continue the voice call through the 3G.

### PRIOR ART DOCUMENT

### NON-PATENT DOCUMENT

Non-patent document 1: 3GPP TS 36.300 V10.3.0, 3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10), March 2011

### SUMMARY OF THE INVENTION

However, the above-described Semi-persistent scheduling (SPS) has the following problem. Specifically, since the SPS is not specified as an indispensable function in LTE, there may be a mobile station not compatible with the SPS. Considering such a situation, there is no other choice but to employ the conventional Dynamic scheduling configured to notify the mobile station of the allocation information on the radio resource depending on the subframe by using the PDCCH. As mentioned above, in the Dynamic scheduling, there may be a situation where the resources on the PDCCH are exhausted even though there are still spare resources on the PDSCH. Here, one conceivable solution is to use a scheme called Delay packing.

In the Delay packing, overheads of the PDCCH are reduced by transmitting multiple packets concerning a voice call together. For example, the overheads of the PDCCH can be reduced to a half by transmitting two packets together.

However, in a situation of a rapid increase in voice calls such as at the time of a disaster, there is still a concern of a failure to process a sufficient number of voice calls even by use of the above-mentioned Delay packing. In the meantime, it is preferable to effectively utilize 3G resources in the environment where the 3G and LTE coexist.

### MEANS FOR SOLVING THE PROBLEM

The present invention has been made in view of the aforementioned circumstances. An objective of the present invention is to provide a base station, a network device, and a communication control method, which are capable of increasing the number of processable voice calls while utilizing 3G resources in a case of a rapid increase in voice calls such as at the time of a disaster.

The first aspect of the present invention is to provide a base station (an eNB 110) adapted to a first radio communication system (an LTE system 10) and configured to control a mobile station (such as a UE 300A) connectable to the first radio communication system and a second radio communication system (a 3G system 20) of a communication scheme different from that of the first radio communication system. Here, the base station includes a metric acquisition unit (an HO activation metric acquisition unit 111) configured to acquire a metric indicating a state of a voice call to be processed through the base station, a mobile station state acquisition unit (a mobile station state acquisition unit 112) configured to acquire a state of the mobile station processing the voice call, and a handover processing unit (an HO processing unit 113) configured to transmit a handover instruction, instructing a handover of the mobile station to the second radio communication system, to the mobile station when a value of the metric acquired by the metric acquisition unit exceeds a predetermined threshold and when the state of the mobile station acquired by the mobile station state acquisition unit satisfies a predetermined condition.

The second aspect of the present invention is to provide a network device configured to control a mobile station connectable to a first radio communication system and a second radio communication system of a communication scheme different from that of the first radio communication system. Here, the network device includes a metric acquisition unit configured to acquire a metric indicating a state of a voice call to be processed through a base station, a mobile station state acquisition unit configured to acquire a state of the mobile station processing the voice call, and a handover processing unit configured to transmit a handover instruction, instructing a handover of the mobile station to the second radio communication system, to the mobile station when a value of the metric acquired by the metric acquisition unit exceeds a predetermined threshold and when the state of the mobile station acquired by the mobile station state acquisition unit satisfies a predetermined condition.

The third aspect of the present invention is to provide a communication control method of controlling a mobile station connectable to a first radio communication system and a second radio communication system of a communication scheme different from that of the first radio communication system. Here, the method includes the steps of acquiring a metric indicating a state of a voice call to be processed through a base station, acquiring a state of the mobile station processing the voice call, and transmitting a handover instruction, instructing a handover of the mobile station to the second radio communication system, to the mobile station when a value of the metric acquired by the metric acquiring step exceeds a predetermined threshold and when the state of the mobile station acquired by the mobile station state acquiring step satisfies a predetermined condition.

### BRIEF DESCRIPTION OF THE DRAWINGS

[Fig. 1] Fig. 1 is an overall schematic configuration diagram of a radio communication system according to an embodiment of the present invention.
[Fig. 2] Fig. 2 is a functional block configuration diagram of an eNB 110 according to the embodiment of the present invention.
[Fig. 3] Fig. 3 is a chart showing an operational flow of a handover of a UE 300A by the eNB 110 according to the embodiment of the present invention.
[Fig. 4] Fig. 4 is a view showing an example of allocation of frequency bands to an LTE system 10 and a 3G system 20 according to the embodiment of the present invention.
[Fig. 5] Fig. 5 is an explanatory view of conventional scheduling according to Dynamic scheduling and SPS.

### MODE FOR CARRYING OUT THE INVENTION

Next, an embodiment of the present invention will be described. In the following description of the drawings, the same or similar components are designated by the same or similar reference numerals. It is to be noted, however, that the drawings are merely schematic representations and dimensional proportions and the like are different from reality.

Therefore, specific dimensions and the like should be determined in consideration of the following description. Moreover, the drawings naturally include portions having dimensional relationships and ratios different from one another.

### (1) Schematic Configuration of Radio Communication System

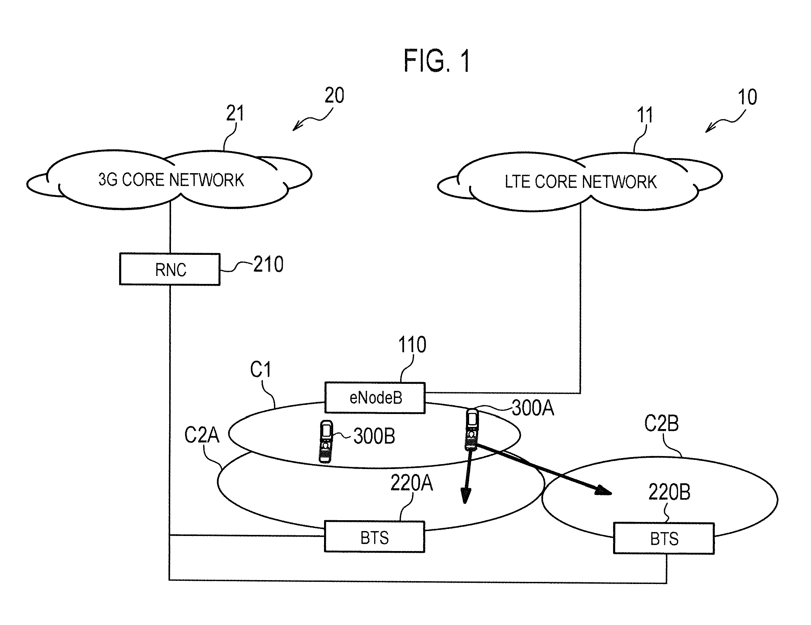

Fig. 1 is an overall schematic configuration diagram of a radio communication system according to the embodiment. As shown in Fig. 1, the radio communication system according to the embodiment includes an LTE system 10 and a 3G system 20.

The LTE system 10 (a first radio communication system) is a radio communication system which complies with an LTE scheme. The 3G system 20 (a second radio communication system) is a radio communication system which complies with a 3G scheme (W-CDMA). In other words, the LTE system 10 and the 3G system 20 employ mutually different radio access technologies (RAT).

The LTE system 10 includes an LTE core network 11 and an eNB 110. The 3G system 20 includes a 3G core network 21, an RNC 210, a BTS 220A, and a BTS 220B.

The eNB 110 forms a cell C1. The eNB 110 is a base station of the LTE system 10, which controls UEs 300A and 300B. Meanwhile, the BTS 220A forms a cell C2A and the BTS 220B forms a cell C2B. Each of the BTS 220A and BTS 220B is a base station of the 3G system 20, which controls the UEs 300A and 300B.

The UE 300A and the UE 300B (mobile stations) can be connected by radio to the LTE system 10 and the 3G system 20. Specifically, the UE 300A (or the UE 300B, likewise hereinafter) executes radio communication with the eNB 110 and is thus connected to the LTE system 10. Meanwhile, the UE 300A executes radio communication with the BTS 220A or the BTS 220B and is thus connected to the 3G system 20.

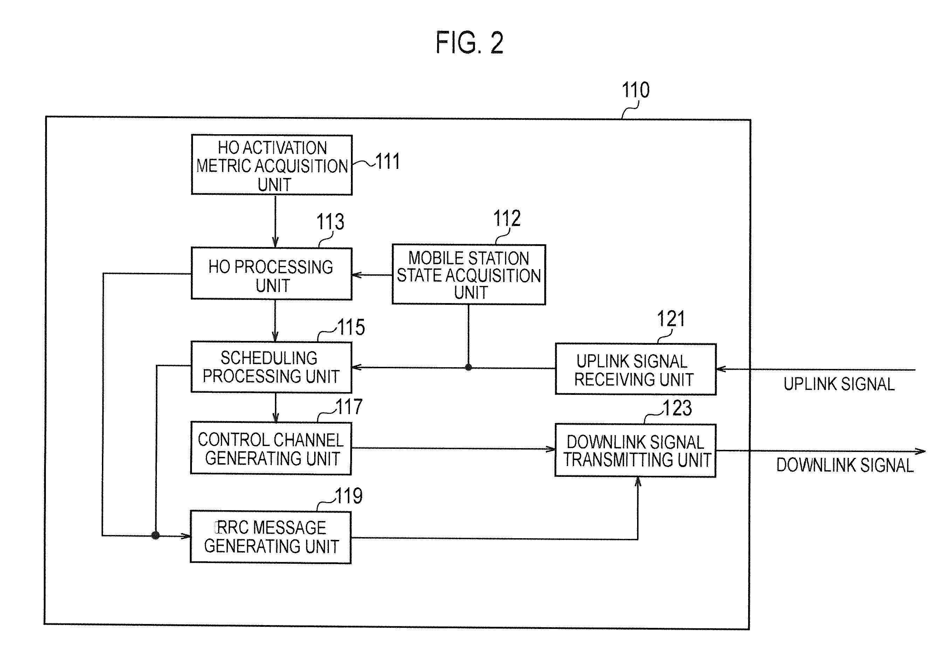

(2) Functional Block Configuration of Base Station Next, a functional block configuration of the radio communication system according to the embodiment will be described. Specifically, the functional block configuration of the eNB 110 is described. Fig. 2 is a functional block configuration diagram of the eNB 110.

As shown in Fig. 2, the eNB 110 includes an HO activation metric acquisition unit 111, a mobile station state acquisition unit 112, an HO processing unit 113, a scheduling processing unit 115, a control channel generating unit 117, an RRC message generating unit 119, an uplink signal receiving unit 121, and a downlink signal transmitting unit 123.

The HO activation metric acquisition unit 111 acquires metrics used for determining activation of a handover (HO) from the LTE system 10 to the 3G system 20, or more specifically, a handover of the UE 300A processing a voice call from voice call communication in a packet-switched (PS) domain in the LTE system 10 to voice call communication in a channel-switched (CS) domain in the 3G system 20.

In other words, the HO activation metric acquisition unit 111 acquires metrics indicating a state of a voice call to be processed through the eNB 110. Specifically, the HO activation metric acquisition unit 111 can acquires values of the metrics listed below.

- The number of UEs holding a voice bearer
- The number of RRC Connected UEs (the number of connected mobile stations)
- An average transfer rate of the UEs holding a voice bearer
- A resource use rate of a downlink physical control channel (PDCCH)
- An average number of multiplexed downlink physical control channel (PDCCH)

The mobile station state acquisition unit 112 acquires the state of the UE processing the voice call. Specifically, the mobile station state acquisition unit 112 can acquire the following information as the information indicating the state of the UE.

- A value of a Channel Quality Indicator (CQI)
- A propagation loss between the UE and the eNB
- The type of the voice call (emergency call, priority call, or ordinary call)

The mobile station state acquisition unit 112 acquires the CQI (reception quality information) fed back from the UE 300A. In addition, the mobile station state acquisition unit 112 estimates the propagation loss (a Pathloss) between the UE and the eNB on the basis of Power head room (a surplus of transmission power) reported from the UE 300A. Further, the mobile station state acquisition unit 112 acquires the type of the voice call processed by the UE 300A on the basis of an identifier called ARP (Allocation and Retention Priority) which is notified from the core network.

The HO processing unit 113 executes handover (HO) processing for the UE 300A from the LTE system 10 to the 3G system 20. Specifically, the HO processing unit 113 transmits a handover instruction, instructing a handover of the UE 300A to the 3G system 20, to the UE 300A when a certain value of the metrics acquired by the HO activation metric acquisition unit 111 exceeds a predetermined threshold and when the state of the UE 300A acquired by the mobile station state acquisition unit 112 satisfies a predetermined condition.

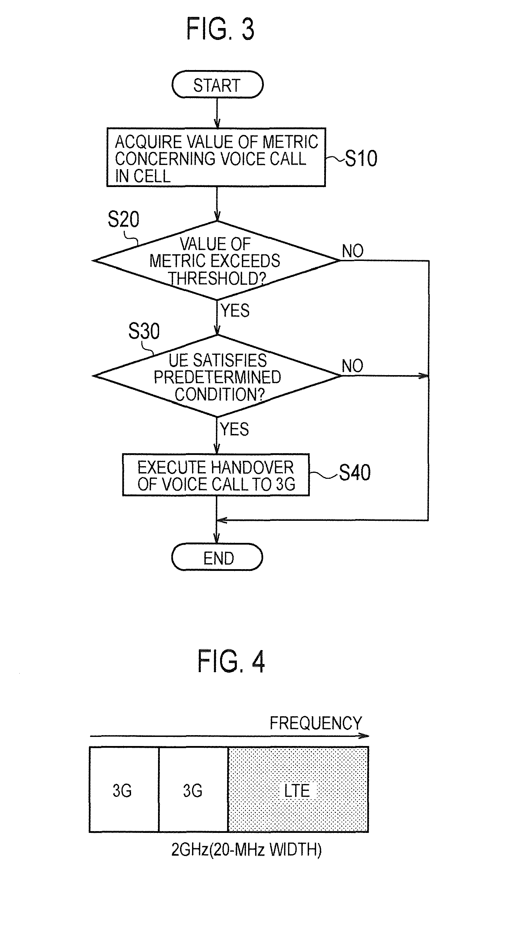

Fig. 4 is shows an example of allocation of frequency bands to the LTE system 10 and the 3G system 20 according to the embodiment. As shown in Fig. 4, a 2-GHz frequency range is used for the LTE system 10 and the system 20. In the example of allocation shown in Fig. 4, a band allocated to the LTE system 10 is almost equal to a band allocated to the 3G system 20. Nevertheless, the following rule generally applies. Specifically, in an introduction period of the LTE system 10, the band to be allocated to the existing 3G system 20 is wide and the band to be allocated to the LTE system 10 is narrow. On the other hand, in a transition period when the introduction of the LTE system 10 is advanced, the band to be allocated to the LTE system 10 becomes wider. In other words, the band to be allocated to the existing 3G system 20 becomes narrower as the band for the LTE system 10 becomes wider.

When the value of the CQI is equal to or below a predetermined threshold, the HO processing unit 113 can transmit the handover instruction (such as HANDOVER COMMAND) to the UE 300A, because the UE having the small CQI consumes a large amount of PDCCH resources.

Meanwhile, when the value of the Pathloss between the UE 300A and the eNB 110 exceeds a predetermined threshold, the HO processing unit 113 can transmit the handover instruction to the UE 300A. The UE having the large Pathloss is likely to consume a large amount of the PDCCH resources. In addition, this UE interferes more with neighboring cells due to an increase in the transmission power of the UE. As a consequence, the UE also has a potential to cause a reduction in the radio resources available for voice calls.

In addition, when the UE 300A processes an ordinary call, i.e., when the type of the voice call is other than an emergency call or a priority call, the HO processing unit 113 can transmit the handover instruction to the UE 300A, because it is desirable for the UE processing an emergency call or a priority call to avoid a risk such as an instantaneous interruption or a handover failure.

In the embodiment, the HO processing unit 113 is adapted to transmit a handover instruction, instructing a handover of the voice call from the LTE system 10 to the 3G system 20, to the UE 300A. The UE 300A can continue the voice call by means of a transition from the voice call communication in the packet-switched (PS) domain in the LTE system 10 to the voice call communication in the channel-switched (CS) domain in the 3G system 20.

If there are multiple frequency bands (2 GHz, 800 MHz) in the cell C2A of the 3G system 20 overlaying the cell C1, then the HO processing unit 113 may select the bands evenly. Alternatively, a less crowded cell may be selected by causing the LTE system 10 (the eNB 110) and the 3G system 20 (the RNC 210) to exchange load information on the respective cells.

The scheduling processing unit 115 executes processing for scheduling the radio resources allocated to various channels. Particularly, the scheduling processing unit 115 schedules the physical downlink control channel (PDCCH), a physical downlink shared channel (PDSCH), and a physical uplink shared channel (PUSCH).

The control channel generating unit 117 generates various control channels on the basis of instructions from the scheduling processing unit 115. Particularly, in the embodiment, the control channel generating unit 117 generates the PDCCH.

The RRC message generating unit 119 generates various messages to be transmitted on a Radio Resource Control layer. Particularly, in the embodiment, the RRC message generating unit 119 generates an RRC Connection Reconfiguration message, for example, which includes a command (such as HANDOVER COMMAND) concerning a handover for realizing the SRVCC standardized in 3GPP TS 23.216 and the like.

The uplink signal receiving unit 121 receives an uplink radio signal transmitted from the UE 300A. The downlink signal transmitting unit 123 transmits a downlink radio signal formed by multiplexing the PDCCH outputted from the control channel generating unit 117, the RRC Message outputted from the RRC message generating unit 119, and the like.

### (3) Operation of Base Station

Next, an operation of the radio communication system according to the embodiment will be described. Specifically, an operation of a handover of the UE 300A by the eNB 110 is described. Fig. 3 shows a flow of the operation of the handover of the UE 300A by the eNB 110.

As shown in Fig. 3, the eNB 110 acquires the values of the metrics related to the voice call of the UE located in the cell C1 (S10). As described previously, the eNB 110 acquires the number of UEs holding a voice bearer, for example.

The eNB 110 determines whether or not a certain value of the metrics thus acquired exceeds a predetermined threshold (S20). When the value of the metric exceeds the predetermined threshold, the eNB 110 determines whether or not the UE (assumed to be the UE 300A in this case) processing the voice call, which has the value exceeding the predetermined threshold, satisfies a predetermined condition (S30). As described previously, the eNB 110 determines whether or not the value of the CQI exceeds the predetermined threshold, for example.

When the UE 300A processing the voice call satisfies the predetermined condition, the eNB 110 executes the handover of the UE 300A to the 3G system 20, or more specifically, the handover of the voice call to the 3G system 20 (S40).

### (4) Operation and Effects

According to the eNB 110, when the value of the metric (such as the number of UEs holding a voice bearer) acquired by the HO activation metric acquisition unit 111 exceeds the predetermined threshold and when the state of the mobile station acquired by the mobile station state acquisition unit 112 satisfies the predetermined condition (such as the value of the CQI being equal to or below the predetermined threshold), the handover instruction instructing the handover of the UE 300A to the 3G system 20 is transmitted to the UE 300A.

Thus, it is possible to increase the number of processable voice calls while utilizing the resources of the 3G system 20 in a case of a rapid increase in voice calls such as at the time of a disaster. Particularly, since many users have migrated from the 3G to LTE in the transition period when the introduction of the LTE system 10 is advanced, a certain amount of the frequency band is thought to be secured for the 3G system 20 for the sake of users who continue to use a roaming band or the 3G. The handover described in the embodiment is especially effective in such a situation.

In the embodiment, the appropriateness of executing the handover of the UE 300A processing the voice call is determined on the basis of the value of the CQI, the propagation loss between the UE and the eNB or the type of the voice call. Accordingly, it is possible to hand over the UE, which has a potential to consume a large amount of the radio resources such as the PDCCH, actively to the 3G system 20 and thereby to increase the number of voice calls processable in the LTE system 10.

### (5) Other Embodiments

Although the contents of the present invention have been described above by way of a certain embodiment of the present invention, it should not be understood that the statements and the drawings constituting part of this disclosure limit the present invention. Various alternative embodiments will be apparent to those skilled in the art from this disclosure.

For instance, in the above-described embodiment, the threshold used for the determination as to whether or not the state of the UE 300A acquired by the mobile station state acquisition unit 112 satisfies the predetermined condition has been explained on the assumption of being a preset value. Instead, an operator may be allowed to change the threshold into a specific value by using an operation system configured to monitor and control the eNB 110 and the like.

The above-described embodiment has explained the handover of the UE 300A from the LTE system 10 to the 3G system 20 as an example. Here, a handover of the UE 300A from the 3G system 20 to the LTE system 10 may also be executed similarly.

The above-described embodiment has explained the 3G system 20 of the W-CDMA scheme as an example. However, the 3G system 20 may adopt a CDMA 2000 scheme and the like instead. In addition, the above-described embodiment has explained the aspect in which the eNB 100 generates the handover instruction and transmits the instruction to the UE 300A. The above-mentioned functions of the eNB 110 may be realized by another network device (such as an MME) instead.

As mentioned above, it is needless to say that the present invention encompasses various embodiments not described herein. Accordingly, the technical scope of the present invention is defined only by the matter to define the invention related to the claims, which is reasonable from the above description.

It is to be noted that the entire contents of Japanese Patent Application No. 2011-197604 (filed September 9, 2011) are incorporated herein by reference.

### INDUSTRIAL APPLICABILITY

According to the features of the present invention, it is possible to provide a base station, a network device, and a communication control method, which are capable of increasing the number of processable voice calls while utilizing 3G resources in a case of a rapid increase in voice calls such as at the time of a disaster.

### EXPLANATION OF THE REFERENCE NUMERALS

- 10: LTE system
- 11: LTE core network
- 20: 3G system
- 21: 3G core network
- 110: eNB
- 111: HO activation metric acquisition unit
- 112: mobile station state acquisition unit
- 113: HO processing unit
- 115: scheduling processing unit
- 117: control channel generating unit
- 119: RRC message generating unit
- 121: uplink signal receiving unit
- 123: downlink signal transmitting unit
- 210: RNC
- 220A, 220B: BTS
- 300A, 300B: UE
- C1, C2A, C2B: cell

## Claims

1. A base station of a first radio communication system, the base station configured to control a mobile station connectable to the first radio communication system and a second radio communication system of a communication scheme different from a communication scheme of the first radio communication system, comprising:
a metric acquisition unit configured to acquire a metric indicating a state of a voice call to be processed through the base station;
a mobile station state acquisition unit configured to acquire a state of the mobile station processing the voice call; and
a handover processing unit configured to transmit a handover instruction, instructing a handover of the mobile station to the second radio communication system, to the mobile station when a value of the metric acquired by the metric acquisition unit exceeds a predetermined threshold and when the state of the mobile station acquired by the mobile station state acquisition unit satisfies a predetermined condition.

2. The base station according to claim 1, wherein
the mobile station state acquisition unit acquires reception quality information on the mobile station, and
the handover processing unit transmits the handover instruction to the mobile station when a value of the reception quality information is equal to or below a predetermined threshold.

3. The base station according to claim 1, wherein
the mobile station state acquisition unit acquires a propagation loss between the mobile station and the base station, and
the handover processing unit transmits the handover instruction to the mobile station when a value of the propagation loss exceeds a predetermined threshold.

4. The base station according to claim 1, wherein
the mobile station state acquisition unit acquires a type of the voice call processed by the mobile station, and
the handover processing unit transmits the handover instruction to the mobile station when the type of the voice call is other than an emergency call and a priority call.

5. The base station according to claim 1, wherein
the first radio communication system is a radio communication system complying with a Long Term Evolution scheme,
the second radio communication system is a radio communication system complying with a Code Division Multiple Access scheme, and
the handover processing unit transmits a handover instruction, instructing a handover of the voice call processed by the mobile station from the first radio communication system to the second radio communication system, to the mobile station and enables continuation of the voice call by Single Radio Voice Call Continuity.

6. A network device configured to control a mobile station connectable to a first radio communication system and a second radio communication system of a communication scheme different from a communication scheme of the first radio communication system, comprising:
a metric acquisition unit configured to acquire a metric indicating a state of a voice call to be processed through a base station;
a mobile station state acquisition unit configured to acquire a state of the mobile station processing the voice call; and
a handover processing unit configured to transmit a handover instruction, instructing a handover of the mobile station to the second radio communication system, to the mobile station when a value of the metric acquired by the metric acquisition unit exceeds a predetermined threshold and when the state of the mobile station acquired by the mobile station state acquisition unit satisfies a predetermined condition.

7. A communication control method of controlling a mobile station connectable to a first radio communication system and a second radio communication system of a communication scheme different from a communication scheme of the first radio communication system, comprising the steps of:
acquiring a metric indicating a state of a voice call to be processed through a base station;
acquiring a state of the mobile station processing the voice call; and
transmitting a handover instruction, instructing a handover of the mobile station to the second radio communication system, to the mobile station when a value of the metric acquired by the metric acquiring step exceeds a predetermined threshold and when the state of the mobile station acquired by the mobile station state acquiring step satisfies a predetermined condition.
